Europäisches Patentamt

European Patent Office

Office européen des brevets

(19)

(11) Veröffentlichungsnummer: **0 209 704 B1**

# (12) EUROPÄISCHE PATENTSCHRIFT

(45) Veröffentlichungstag der Patentschrift: 27.12.91

(51) Int. Cl.⁵: **G01N 21/59**, G05D 25/02, G01J 1/32, G01J 1/18

(21) Anmeldenummer: **86107900.2**

(22) Anmeldetag: **10.06.86**

(54) **Einrichtung zur optischen Trübungsmessung von Gasen.**

(30) Priorität: **24.07.85 DE 3526458**

(43) Veröffentlichungstag der Anmeldung:
**28.01.87 Patentblatt 87/05**

(45) Bekanntmachung des Hinweises auf die
Patenterteilung:
**27.12.91 Patentblatt 91/52**

(84) Benannte Vertragsstaaten:
**AT BE CH DE FR IT LI NL**

(56) Entgegenhaltungen:
| | |
|---|---|
| AT-B- 348 802 | AT-B- 376 301 |
| DE-A- 2 436 866 | DE-B- 2 741 914 |
| US-A- 3 973 123 | US-A- 4 167 665 |

(73) Patentinhaber: **GRUNDIG E.M.V. Elektro-Mechanische Versuchsanstalt Max Grundig holländ. Stiftung & Co. KG.
Kurgartenstrasse 37
W-8510 Fürth/Bay.(DE)**

(72) Erfinder: **Ioannides, Gregor
Föhrenstrasse 12
W-8510 Fürth/Bayern(DE)**

(74) Vertreter: **Dreykorn-Lindner, Werner, Dipl.-Ing.
GRUNDIG E.M.V. Elektro-Mechanische Versuchsanstalt Max Grundig holländ.Stiftung & Co. KG Lizenz- und Patentabteilung Kurgartenstrasse 37
W-8510 Fürth/Bayern(DE)**

## Beschreibung

Die Erfindung bezieht sich auf eine Einrichtung zur Messung des Rußanteils in Abgasen von Dieselmotoren, gemäß dem Oberbegriff des Patentanspruchs 1.

Zur Messung der Trübung von Gasen, insbesondere zur Messung des Rußanteils in Abgasen von Dieselmotoren, sind bereits Verfahren und Einrichtungen bekannt, welche mittels eines Filterpapiers im Abgasstrom entweder die durch den Rußanteil erzeugte Gewichtszunahme des Filterpapiers oder die Farbtönung des Filters als Maß für den Rußgehalt auswerten.

Auch sind optische Trübungsmeßverfahren bekannt, bei denen im Abgas vorhandene Rußpartikel mit Hilfe von Licht-Streuverfahren gemessen werden.

Eine Einrichtung zur optischen Trübungsmessung des Rußanteils in Abgasen von Dieselmotoren der eingangs genannten Art ist beispielsweise durch das Gerät "Smokemeter", Modell 200 der Firma Berkeley bekannt, das nach dem Prizip der Extinktion arbeitet. Dabei wird die Opazität ermittelt, die dem prozentualen Lichtverlust entspricht, der bei der Durchleuchtung der Abgassäule entsteht.

Aus der US-Patentschrift US-A 4 167 665 ist eine Anordnung zur optischen Trübungsmessung von Gasen bekannt, bei der durch die Trübungsmessung an einem Referenzgas ein Fehlersignal gewonnen wird, das zur automatischen Kalibrierung der Meßanordnung der Lichtquelle, welche die Gasprobe beleuchtet, zugeführt wird und in Abhängigkeit des Fehlersignals die Intensität der Lichtquelle beeinflußt.

Weiter ist aus DE-A- 24 36 866 eine Einrichtung zur Bestimmung der Trübung von Dieselmotorabgasen bekannt, bei der Lichtstrahlen durch eine Meß- und eine Vergleichskammer auf einen lichtempfindlichen Sensor geleitet werden. Die Differenz der zeitlich versetzt anfallenden Ausgangssignale wird mit Hilfe einer Abtast- und Halteschaltung ermittelt und ist ein Maß für die Trübung.

Die bekannten Einrichtungen bzw. Meßgeräte sind jedoch insbesondere wegen ihres relativ aufwendigen Aufbaus und den Meßmethoden nachteilig und schwierig zu handhaben.

Der Erfindung liegt daher die Aufgabe zugrunde, eine Einrichtung zur optischen Trübungsmessung von Gasen zu schaffen, die relativ einfach aufgebaut ist, betriebssicher arbeitet und insbesondere eine einfache Handhabung selbst bei unterschiedlich aufgebauten Meßobjekten ermöglicht.

Diese Aufgabe wird erfindungsgemäß durch die im kennzeichnenden Teil des Patentanspruchs 1 angegebenen Merkmale gelöst.

Mit der erfindungsgemäßen Einrichtung wird ein einfach aufgebautes und preiswertes Gerät zur objektiven Beurteilung der Trübung von Gasen angegeben, das sich insbesondere im Kfz-Werkstattbetrieb zur Überprüfung des Rußanteils in Abgasen von Dieselmotoren durch einfache Handhabung auszeichnet, wobei aufwendige Probefahrten und Messungen an Rollen- bzw. Leistungsprüfständen nicht notwendig sind.

Zweckmäßige Ausgestaltungen und vorteilhafte Weiterbildungen der Erfindung ergeben sich aus den Unteransprüchen.

Im folgenden wird anhand eines Ausführungsbeispiels für die Messung des Rußanteils in Abgasen von Dieselmotoren die Erfindung näher beschrieben. Es zeigen

Fig. 1    ein Blockschaltbild einer erfindungsgemäßen Einrichtung und

Fig. 2    in schematischer Darstellung den Aufbau einer mit der erfindungsgemäßen Einrichtung verwendeten Meßeinheit.

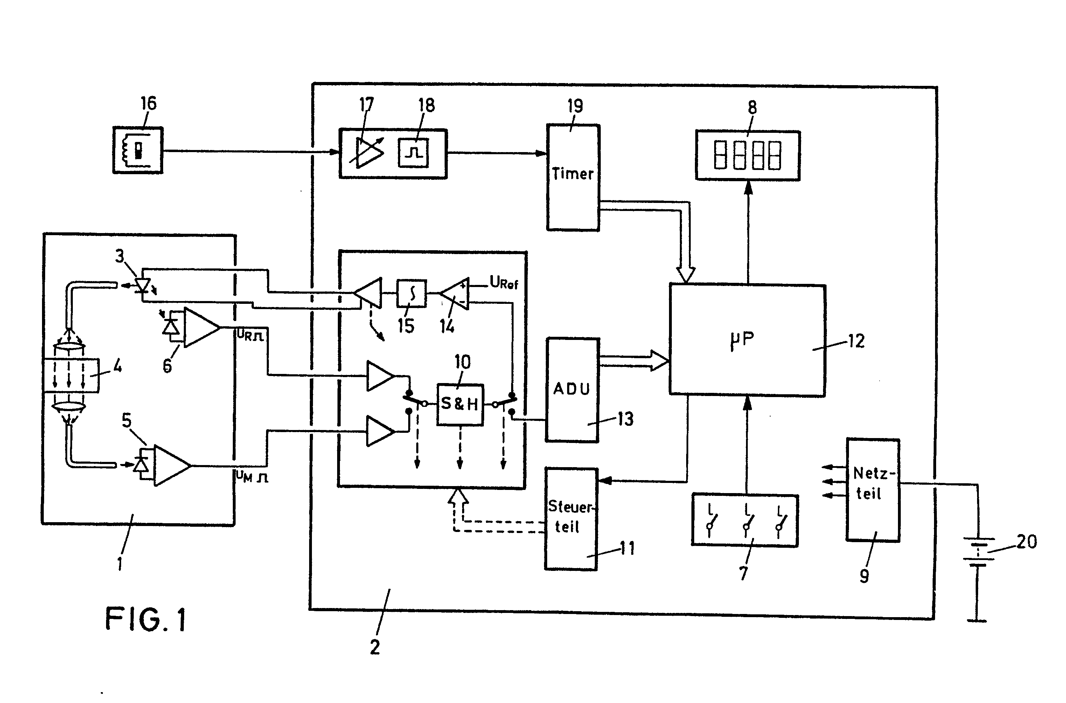

Die erfindungsgemäße Einrichtung gemäß Figur 1 besteht aus einer Meßeinheit 1 und einer Auswerteeinheit 2, die über ein nicht näher dargestelltes mehradriges, abgeschirmtes Kabel mit der Meßeinheit 1 verbunden ist.

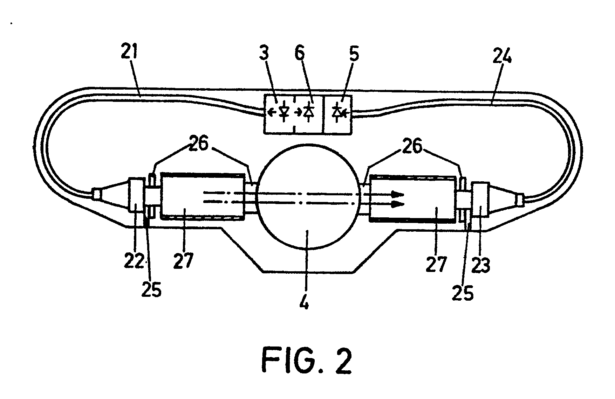

Die Meßeinheit 1 ist dabei als eine an den Abgaskanal, insbesondere das Auspuffendrohr des Motors adaptierbare Einheit mit definiertem Innendurchmesser und vorgegebener Meßrohrlänge ausgebildet. Der nähere konstruktive Aufbau der Meßeinheit 1 ist in Verbindung mit der Beschreibung zur Figur 2 näher erläutert.

Gemäß Figur 1 weist die Meßeinheit 1 eine Lichtquelle 3, vorzugsweise in Form einer Leuchtdiode, auf, die Lichtimpulse konstanter Stärke im sichtbaren Bereich (grün) zur Durchleuchtung einer vorgegebenen Meßstrecke in einem Meßraum 4 erzeugt, wobei die Durchleuchtung quer zur Gasstromrichtung erfolgt. Nach Durchstrahlen der Meßstrecke wird die Intensität des Lichtes mittels einer lichtempfindlichen Einrichtung 5 (Meßempfänger und Fotodiode) relativ zum rußfreien Zustand (entsprechend 0 % Trübung) gemessen, d. h. die durch den Rauch hervorgerufene Schwächung des ausgesendeten Lichts wird ermittelt. Die Fotodiode des Meßempfängers 5 liefert Ausgangsimpulse, deren Amplitude proportional der Lichtschwächung in der Meßstrecke ist. Ein zweiter mit dem Sender optisch direkt gekoppelter Detektor (Regelempfänger 6 mit Fotodiode) wird zur Regelung der Lichtstärke des Meßlichtstrahles herangezogen.

In der beispielsweise im Fahrer-Raum untergebrachten Auswerteeinheit 2 befinden sich ein Bedienteil 7, eine Anzeigeeinheit 8 (Digitalanzeige), eine Stromversorgung 9 sowie die Elektronik zur Signalverarbeitung.

Die Gesamtfunktion der aus Meßeinheit 1, Auswerteeinheit 2 und einer weiter unten noch näher zu beschreibenden Drehzahl-Aufbereitungsschaltung bestehenden erfindungsgemäßen Einrichtung wird im folgenden beschrieben:

Um aufwendige Probefahrten und Messungen an einem Rollen- bzw. Leistungsprüfstand zu umgehen, wurde das Verfahren der "freien Beschleunigung" gewählt. Bei dieser dynamischen Messung wird die Drehmasse des Motors vorteilhaft als Belastung genutzt. Ausgehend vom Motorleerlauf werden erfindungsgemäß eine bestimmte Anzahl von Meßzyklen durchgeführt, die durch Abgabe von Gasstößen des Motors ausgelöst werden, wobei die maximale Schwärzung des Gases gemessen und nach dem Prinzip der Extinktion die relative Lichtabsorption durch die im Abgas befindlichen Rußpartikel fotometrisch ausgewertet wird.

Die vom Meßempfänger 5 und dem Regelempfänger 6 der Meßeinheit 1 abgegebenen Ausgangsimpulse werden angepaßt und im Zeitmultiplex einer Abtast- und Halteschaltung 10 (sample and hold) in der Auswerteeinheit 2 zugeführt. Die zeitliche Steuerung erfolgt dabei von einem Steuerteil 11, abgeleitet von einem Taktsignal einer Recheneinheit 12 (Mikroprozessor). Das abgetastete Meßsignal wird von einem Analog/Digital-Umsetzer 13 umgesetzt und in der Recheneinheit 12 weiterverarbeitet, während die Regelwerte über eine Regelschleife der Lichtquelle 3 zugeführt werden. Dabei wird das der Lichtmenge der Leuchtdiode 3 proportionale Signal des Regelempfängers 6 in einem Vergleicher 14 mit einer konstanten Referenzspannung $U_{Ref}$ verglichen. Das Differenz- bzw. Ausgangssignal des Vergleichers 14 steuert in Verbindung mit einem integralen Regler 15 die getastete Stromquelle derart, daß die abgestrahlte Lichtleistung der stark von Temperaturgang und Alterung abhängigen Leuchtdiode 3 konstant bleibt.

Die Auslösung von Meßwertermittlung und Meßwertberechnung erfolgt abhängig von motorbezogenen Parametern, die ein definierter Drehzahlanstieg des Motors oder ein definierter Anstieg des Rußanteils sein können. Für die Berücksichtigung eines definierten Drehzahlanstieges ist erfindungsgemäß mit der Auswerteeinheit 2 ein Oberer-Totpunkt-Geber 16 (OT-Geber) verbunden, dessen Ausgangsimpulse - deren Frequenz der Drehzahl proportional ist - in einem geregelten Verstärker 17 aufbereitet und einem nachfolgenden Impulsformer 18 mit Flip-Flop zugeführt werden, der seinerseits einen mit der Recheneinheit 12 verbundenen Zeitgeber 19 (Timer) steuert, der der Recheneinheit 12 die Drehzahlinformationen liefert.

Der Mikroprozessor 12 mit seinen peripheren Bausteinen ist für den sinnvollen Gesamtablauf der Meßeinrichtung verantwortlich. Insbesondere veranlaßt er nur sinnvolle Meßmoden und eine Überwachung der Signalgeber mit eventueller Fehlermeldung. Auch werden die festgelegten Meßkriterien, wie der definierte Drehzahl- bzw. Rußanteilanstieg, eine Speicherung mehrerer Meßwerte bzw. Trübungsspitzenwerte mit Maximalwert-Ermittlung und Mittelwertbildung der gespeicherten Spitzenwerte sowie die Anzahl der Meßzyklen überwacht. Eine Steuerung der Meßwert- und Statusanzeigen sowie eine Abfrage des Bedienteils, das Berechnen der Meßwerte und die Mittelwertbildung werden ebenfalls von der Recheneinheit 12 bewerkstelligt. Zur vorteilhaften leichten Handhabung der erfindungsgemäßen Einrichtung trägt auch die weitere Funktion der Recheneinheit 12 bei, wonach eine Benutzerführung mit Steuerung der Meßdurchführung erfolgt. Hierbei werden beispielsweise Aufforderungen an die Bedienungsperson, Anzeigen über den Zustand des Meßgerätes, Wartezeiten, Meßablauf, usw. gesteuert.

Mit dem Bedienteil 7 wird vor jedem Meßablauf gewählt, ob die Meßauslösung über den Drehzahlanstieg oder den Rußanteilanstieg erfolgen soll, was beispielsweise mittels entsprechender Tasten im Bedienteil 7 erfolgen kann. Je nach gewählter Meßart wird dann beispielsweise die Drehzahl in 1/min oder der Rußanteil in "%-Trübung" angezeigt. Der eigentliche Meßablauf kann beispielsweise mittels einer geeigneten Taste oder mittels der zu wählenden Meßart-Taste dann gestartet werden. Die Auslösung über eine Auswertung des Drehzahlanstiegs hat dabei Priorität, da bei einigen Fahrzeugen kein wesentlicher Anstieg der Trübung auftritt.

Die vorstehend beschriebenen Werte für Drehzahl (1/min) und Trübung (in %) sowie Angaben über die auszuführende Anzahl an Meßzyklen mit jeweiliger Aufforderung und Aussagen über eine Selbstkontrolle und ein Einkalibrieren des Meßgerätes, wie auch ungenügende Meßvoraussetzungen, beispielsweise Verschmutzungen der optischen Einrichtungen, Defekte der Meßeinheit und ähnliches werden der Bedienungsperson in der Anzeigeeinheit 8 angezeigt, die beispielsweise als mehrstellige LED-Digitalanzeigeeinheit ausgebildet sein kann.

Das erfindungsgemäße Meßgerät ist für den Betrieb an der Fahrzeugbatterie 20 ausgelegt, mit der die Stromversorgung 9 zur Erzeugung der intern benötigten Versorgungsspannungen für den Analog- und Digitalteil der Schaltung verbunden ist. Ferner enthält die Stromversorgung 9 Überwachungs- und Schutzschaltungen.

Der Meßablauf, in Verbindung mit der Benutzerführung und den Fehlerhinweisen, gestattet eine Meßeinrichtung, die einfache und zuverlässige Messungen liefert und Fehlerquellen ausschließt, wobei durch die Messung der Rußpartikelkonzentration im Abgas zuverlässig und genau Aufschluß über den Zustand des Motors und die korrekte Einstellung der Einspritzpumpe erhalten wird. Diese Daten liefern dabei nicht nur wichtige Werte für Maßnahmen zur Reduzierung der Umweltbelastung (hoher Anteil an Rußpartikeln), sondern auch Werte zur Erhöhung der Motor-Lebensdauer. Denn ein hoher Anteil an Rußpartikeln ist auch ein Zeichen für zu hohe Treibstoffeinspritzmengen, welche erhöhten Verbrauch, Verkoken der Einspritzdüsen und damit reduzierte Motorlebensdauer zur Folge haben. Durch korrekte Justage der Einspritzpumpe werden diese für den Motor schädlichen Folgen vermieden.

Figur 2 zeigt in schematischer Darstellung den Aufbau der erfindungsgemäßen Meßeinheit mit der Leuchtdiode 3 als Lichtquelle, dem Regelempfänger 6 und dem Meßempfänger 5, die zusammen eine bauliche Einheit bilden. Die Lichtimpulse der Leuchtdiode 3 werden über eine Lichtwellenleiterverbindung 21 einem optischen Linsensystem 22 zugeführt, das ein paralleles Strahlenbündel durch den Meßraum 4 mit definiertem Durchmesser schickt.

Ein zweites optisches Linsensystem 23 sammelt das empfangene Strahlenbündel in der Faserebene einer zweiten Lichtwellenleiterverbindung 24, die das Licht der Fotodiode des Meßempfängers 5 zuführt, die - wie bereits weiter oben erläutert - in Verbindung mit einem Transimpedanzverstärker als Meßempfänger dient und die Lichtimpulse in proportionale Spannungsimpulse

$$U_M \sqcap$$

wandelt, deren Amplituden in der Auswerteeinheit 2 ausgewertet werden.

Der Regelempfänger 6 ähnlichen Aufbaus, detektiert das direkt vom Sender (Leuchtdiode 3) stammende Streulicht. Seine Ausgangsimpulse

$$U_R \sqcap$$

sind der Lichtstärke der Lichtquelle proportional und regeln den Betriebsstrom der Senderdiode. Dadurch wird eine konstante Lichtstärke erreicht, unabhängig von Temperaturgang und Alterung der Senderdiode.

Die Sende- und Empfangselemente sind in einem nicht näher ausgeführten Metallblock gemeinsam untergebracht. Dieser Block sorgt für thermischen Gleichlauf und reproduzierbare optische Verhältnisse. Einschließlich der am Block befestigten Lichtwellenleiterverbindungen ergibt sich ein leicht wechselbarer Funktionsblock.

Die optischen Linsensysteme 22 und 23 werden von einem ringförmigen PTC-Widerstand (Kaltleiter) beheizt, um Betauungseffekte zu verhindern. Bohrungen 25 nahe den Linsen der optischen Linsensysteme 22 und 23 sorgen für eine geeignete Luftströmung, um übermäßiges Verschmutzen durch Rußpartikel zu verhindern. Die Linsen ihrerseits sind für Reinigungszwecke leicht wechselbar angebracht. Bei Verschmutzungen von beispielsweise mehr als 20 % Trübung wird durch die Auswerteeinheit 2 eine Messung verhindert; die Anzeigeeinheit 8 weist dann die Bedienungsperson optisch darauf hin, die Linsen zu reinigen.

Der Aufbau der Meßeinheit 1 gemäß Figur 2 zeigt ferner Blenden 26 vor und nach den beiden als Lichtkanal mit Luftspülsystem ausgebildeten Bohrungen 25 der Anordnung.

Für die Meßeinheit 1 mit Optik, Lichtwellenleiterverbindung und opto-elektrischen Sende- und Empfangselementen sowie den zugehörigen elektronischen Anpaß-Schaltungen ist als Gehäuse-Grundkörper ein Druckgußteil vorgesehen, während der Meßraum (Meßrohr) und die Adaptionsteile für die Montage an das Auspuffendrohr vorzugsweise aus Stahlblech gefertigt sein können. Die Anpassung an das Auspuffrohr geschieht beispielsweise mittels einer geeigneten Aufstecktülle aus Gummi.

**Patentansprüche**

1. Einrichtung zur Messung des Rußanteils in Abgasen von Dieselmotoren, bestehend aus einer Meßeinheit (1) mit
   a) einem vom zu messenden Gas durchströmten Meßraum (4),
   b) einer Lichtquelle (3) zur Durchleuchtung einer vorgegebenen Meßstrecke im Meßraum (4), wobei die Durchleuchtung quer zur Gasstromrichtung erfolgt,
   c) einer die Intensität des Lichtes nach Durchstrahlen der Meßstrecke relativ zum gasfreien Zustand messenden lichtempfindlichen Meßempfänger (5),

   und aus einer über ein Kabel mit der Meßeinheit (1) verbundenen Auswerteeinheit (2) mit
   d) einer Einrichtung (10, 13, 14, 15) zur Meßwertaufbereitung,
   e) einer Recheneinheit (12) zur Auswertung und Berechnung der gemessenen Werte für eine Anzeige in
   f) einer Anzeigeeinheit (8),
   g) einem Bedienteil (7) und einer Stromversorgung (9, 20),
   **dadurch gekennzeichnet, daß**
   h) ein mit der Lichtquelle (3) optisch gekoppelter Regelempfänger (6) zur Regelung der Lichtstärke des Meßlichtstrahles vorgesehen ist, wobei im Regelempfänger (6) das direkt von der Lichtquelle stammende Streulicht detektiert wird,

i) eine Abtast- und Halteschaltung (10) vorgesehen ist, der die Werte von Meßempfänger (5) und Regelempfänger (6) im Zeitmultiplex zugeführt werden, wobei anschließend die Meßwerte in der Recheneinheit (12) weiterverarbeitet und die Regelwerte über eine Regelschleife der Lichtquelle (3) zugeführt werden,

j) die Recheneinheit (12) ferner zur Speicherung mehrerer Meßwerte bzw. Trübungsspitzenwerte und Mittelwertbildung der gespeicherten Spitzenwerte vorgesehen ist, wobei die Spitzenwerte mittels dynamischer Messung mit einer bestimmten Anzahl von Meßzyklen ermittelt werden,

k) eine Einrichtung vorgesehen ist, die der Recheneinheit (12) motorbezogene Parameter zur Auslösung von Meßwertermittlung und Meßwertberechnung zuführt.

2. Einrichtung nach Anspruch 1, **dadurch gekennzeichnet,** daß die Meßeinheit (1) als eine an den Abgaskanal, insbesondere das Auspuffendrohr des Motors, adaptierbare Einheit ausgebildet ist.

3. Einrichtung nach Anspruch 1 oder 2, **dadurch gekennzeichnet,** daß Lichtquelle (3) bzw. Meßempfänger (5) über eine Lichtwellenleiter-Verbindung (21, 24) mit dem Meßraum (4) innerhalb der Meßeinheit (1) verbunden sind.

4. Einrichtung nach einem der vorhergehenden Ansprüche 1 bis 3, **dadurch gekennzeichnet,** daß im Strahlengang vor bzw. nach dem Meßraum (4) optische Linsensysteme (22, 23), Blenden (26) und Luftkanäle (25) vorgesehen sind.

5. Einrichtung nach Anspruch 4, **dadurch gekennzeichnet,** daß die optischen Linsensysteme (22, 23) vorzugsweise von einem ringförmigen Widerstand mit positivem Temperaturkoeffizienten beheizt werden.

6. Einrichtung nach einem der vorhergehenden Ansprüche 1 bis 5, **dadurch gekennzeichnet,** daß als Lichtquelle eine Leuchtdiode (3) vorgesehen ist, die Lichtimpulse konstanter Stärke im sichtbaren Bereich aussendet.

7. Einrichtung nach Anspruch 1, **dadurch gekennzeichnet,** daß als Parameter zur Auslösung von Meßwertermittlung und Meßwertberechnung ein definierter Drehzahlanstieg des Motors vorgesehen ist.

8. Einrichtung nach Anspruch 1, **dadurch gekennzeichnet,** daß als Paramter zur Auslösung von Meßwertermittlung und Meßwertberechnung ein definierter Anstieg der Rauchgasdichte vorgesehen ist.

9. Einrichtung nach Anspruch 1, **dadurch gekennzeichnet,** daß die Lichtimpulse des Meßempfängers (5) und des Regelempfängers (6) jeweils in proportionale Spannungsimpulse umgewandelt und anschließend der Abtast- und Halteschaltung (10) zugeführt werden.

10. Einrichtung nach einem der vorhergehenden Ansprüche 1 bis 9, insbesondere Anspruch 7, **dadurch gekennzeichnet,** daß im Motor ein Geber (16) vorgesehen ist, der Drehzahlinformationen abgibt, die entsprechend aufbereitet (17 bis 19) der Recheneinheit (12) zugeführt werden.

**Claims**

1. Device for measuring the content of particulate matter in exhaust gases from diesel engines, comprising a measuring unit (1) having

a) a measuring chamber (4) through which the gas to be measured flows,

b) a light source (3) for transilluminating a given measuring zone in the measuring chamber (4), the transillumination taking place transversely to the direction of gas flow,

c) a light-sensitive measuring receiver (5), measuring the intensity of the light after radiating through the measuring zone, relative to the gas-free state,

and comprising an evaluation unit (2), connected to the measuring unit (1) via a cable and having

d) a device (10, 13, 14, 15) for measured-value conditioning,

e) an arithmetic unit (12) for evaluating and calculating the measured values for a display in

f) a display unit (8),

g) an operator control part (7) and a power supply (9, 20),

characterised in that

h) an automatic control receiver (6), optically coupled to the light source (3), is provided for controlling the light intensity of the measuring light beam, the stray light originating directly from the light source being detected in the automatic control receiver (6),

i) a sample and hold circuit (10) is provided, to which the values from the measuring receiver (5) and automatic control receiver (6) are fed in time-division multiplex mode, the measured values subsequently being further processed in the arithmetic unit (12) and the controlled values fed to the light source (3) via a control loop,

j) the arithmetic unit (12) is also intended for storing a plurality of measured values or peak opacity values and averaging the stored peak values, the peak values being determined by means of dynamic measurement with a certain number of measuring cycles,

k) a device is provided which feeds engine-related parameters to the arithmetic unit (12) to initiate measured value determination and measured value calculation.

2. Device according to Claim 1, characterised in that the measuring unit (1) is designed as a unit which can be adapted to the exhaust duct, in particular the exhaust tail pipe of the engine.

3. Device according to Claim 1 or 2, characterised in that light source (3) and/or measuring receiver (5) are connected via an optical wave guide connection (21, 24) to the measuring chamber (4) within the measuring unit (1).

4. Device according to one of the preceding Claims 1 to 3, characterised in that optical lens systems (22, 23), diaphragms (26) and air passages (25) are provided in the path of rays upstream or downstream of the measuring chamber (4).

5. Device according to Claim 4, characterised in that the optical lens systems (22, 23) are preferably heated by an annular resistor with positive temperature coefficient.

6. Device according to one of the preceding Claims 1 to 5, characterised in that a light-emitting diode (3), which emits light pulses of constant intensity in the visible range, is provided as light source.

7. Device according to Claim 1, characterised in that a defined increase in the speed of the engine is provided as the parameter for initiating measured value determination and measured value calculation.

8. Device according to Claim 1, characterised in that a defined increase in the emission density is provided as the parameter for initiating measured value determination and measured value calculation.

9. Device according to Claim 1, characterised in that the light pulses of the measuring receiver (5) and of the automatic control receiver (6) are in each case converted into proportional voltage pulses and subsequently fed to the sample and hold circuit (10).

10. Device according to one of the preceding Claims 1 to 9, in particular Claim 7, characterised in that in the engine there is provided a pick up (16), which transmits speed information which, appropriately conditioned (17 to 19), is fed to the arithmetic unit (12).

**Revendications**

1. Dispositif pour mesurer le pourcentage de suie dans des gaz d'échappement de moteurs diesel, constitué par une unité de mesure (1) comportant

a) une chambre de mesure (4) traversée par le gaz à mesurer,

b) une source de lumière (3) servant à éclairer une section de mesure prédéterminée située dans la chambre de mesure (4), l'éclairement s'effectuant transversalement par rapport à la direction de circulation du gaz,

c) un récepteur de mesure photosensible (5), qui mesure l'intensité de la lumière après traversée de la section de mesure par rapport à l'état sans gaz, et une unité d'évaluation (2) raccordée à l'unité de mesure (1) par l'intermédiaire d'un câble et comportant

d) un dispositif (10,13,14,15) servant à préparer les valeurs de mesure,

e) une unité de calcul (12) servant à évaluer et calculer les valeurs mesurées pour un affichage dans

f) une unité d'affichage (8),

g) une partie de commande (7) et un système d'alimentation en courant (9,20),

caractérisé en ce que

h) il est prévu un récepteur de réglage (6) accouplé optiquement à la source de lumière (3) et servant à régler l'intensité lumineuse du faisceau de lumière de mesure et dans lequel la lumière dispersée provenant directement de la source de lumière est détectée,

i) il est prévu un circuit d'échantillonnage et de blocage (10), auquel les valeurs du récepteur de mesure (5) et du récepteur de réglage (6) sont envoyées selon un multiplexage temporel, les valeurs de mesure étant ensuite soumises à un traitement ultérieur dans l'unité de calcul (12) et les valeurs de réglage étant envoyées par l'intermédiaire d'une boucle de réglage à la source de lumière (3),

j) l'unité de calcul (12) est en outre prévue pour la mémorisation de plusieurs valeurs de mesure ou de plusieurs valeurs maximales de turbidité et pour la formation de la valeur moyenne des valeurs maximales mémorisées, les valeurs maximales étant déterminées au moyen d'une mesure dynamique, avec un nombre déterminé de cycles de mesure,

k) il est prévu un dispositif, qui envoie à l'unité de calcul (12) des paramètres, liés au moteur, pour le déclenchement de la détermination de valeurs de mesure et du calcul de valeurs de mesure.

2. Dispositif selon la revendication 1, caractérisé en ce que l'unité de mesure (1) est réalisée sous la forme d'une unité pouvant être adaptée au canal des gaz d'échappement, notamment au tuyau d'échappement du moteur.

3. Dispositif selon la revendication 1 ou 2, caractérisé en ce que la source de lumière (3) ou le récepteur de mesure (5) est raccordé par l'intermédiaire d'une liaison à guide d'ondes optiques (21,24) à la chambre de mesure (4) à l'intérieur de l'unité de mesure (1).

4. Dispositif selon l'une des revendications précédentes 1 à 3, caractérisé en ce que des systèmes optiques à lentilles (22,23), des diaphragmes (26) et des canaux de circulation d'air (25) sont prévus dans le trajet du rayonnement en amont ou en aval de la chambre de mesure (4).

5. Dispositif selon la revendication 4, caractérisé en ce que les systèmes optiques à lentilles (22,23) sont chauffés de préférence au moyen d'une résistance annulaire présentant un coefficient de température positif.

6. Dispositif selon l'une des revendications précédentes 1 à 5, caractérisé en ce qu'il est prévu, comme source de lumière, une diode à luminescence (3), qui émet des impulsions de lumière d'intensité constante dans le domaine visible.

7. Dispositif selon la revendication 1, caractérisé en ce qu'un accroissement défini de la vitesse de rotation du moteur est prévu en tant que paramètre pour déclencher la détermination de valeurs de mesure et le calcul de valeurs de mesure.

8. Dispositif selon la revendication 1, caractérisé en ce qu'un accroissement défini de la densité des gaz de fumée est prévu en tant que paramètre pour déclencher la détermination de valeurs de mesure et le calcul de valeurs de mesure.

9. Dispositif selon la revendication 1, caractérisé en ce que les impulsions de lumière du récepteur de mesure (5) et du récepteur de régulation (6) sont converties respectivement en des impulsions de tension proportionnelles et sont envoyées ensuite au circuit d'échantillonnage et de blocage (10).

10. Dispositif selon l'une des revendications précédentes 1 à 9, notamment la revendication 7 , caractérisé en ce que dans le moteur est prévu un transmetteur (16), qui délivre des informations sur la vitesse de rotation, qui sont envoyées à l'unité de calcul (12) en étant préparées de façon correspondante (17 à 19).

FIG.1

FIG. 2